# EUROPÄISCHE PATENTSCHRIFT

(11) **EP 3 446 184 B1**
(45) Veröffentlichungstag und Bekanntmachung des Hinweises auf die Patenterteilung: **28.02.2024**
(21) Anmeldenummer: 17721546.4
(22) Anmeldetag: 19.04.2017
(51) Int. Cl.: G05B 19/418

(54) **SICHERHEITSEINRICHTUNG UND SICHERHEITSVERFAHREN**
SAFETY DEVICE AND SAFETY METHOD
DISPOSITIF DE SÉCURITÉ ET PROCÉDÉ DE SÉCURITÉ

(30) Priorität: 22.04.2016 DE 102016107564
(43) Veröffentlichungstag der Anmeldung: 27.02.2019
(73) Patentinhaber: KUKA Systems GmbH, 86165 Augsburg (DE)
(72) Erfinder: ZIMMERMANN, Tobias, 80339 München (DE); LEOCATA, Luca, 86438 Kissing (DE)
(74) Vertreter: Ernicke, Klaus Stefan
(86) Internationale Anmeldenummer: PCT/EP2017/059219
(87) Internationale Veröffentlichungsnummer: WO 2017/182486

(56) Entgegenhaltungen:
- EP-A1- 2 722 687
- WO-A1-2007/002967
- DE-A1-102007 045 143
- DE-A1-102012 020 973
- DE-B3-102007 026 399
- US-A1- 2013 190 915

## Beschreibung

Die Erfindung betrifft eine Sicherheitseinrichtung und ein Sicherheitsverfahren mit den Merkmalen im Oberbegriff des Verfahrens- und Vorrichtungshauptanspruchs.

Aus der Praxis ist es bekannt, Fertigungsstationen und Fördermittel zum Transport von Werkstücken mit jeweils einem eigenen Sicherheitskreis auszustatten. Die Fördermittel fahren zur Übergabe von Werkstücken jeweils an eine externe und periphere Übergabestelle an einer Schutzabtrennung der Fertigungsstation. Durch den peripheren Kontakt und das Handling der Werkstücke durch eine stationsinterne Handlingeinrichtung im Rahmen des stationseigenen Sicherheitskreises werden Sicherheitsprobleme vermieden.

WO 2007/002967 A1 betrifft Verfahren sowie geeignete Vorrichtungen zum sicheren Herstellen und Aufheben einer zeitweiligen daten- und/oder signaltechnischen Wirkverbindung zwischen einer mobilen Bedienvorrichtung, welche zumindest ein sicherheitstechnisch speziell ausgeführtes Sicherheitsschaltelement aufweist, gegenüber dem Sicherheitskreis sowie der funktionalen Steuerung einer steuerbaren technischen Einrichtung.

DE 10 2007 026399 B3 bezieht sich auf ein Verfahren zum selektiven Stillsetzen von führerlosen Transportsystemen innerhalb eines von einer Vielzahl führerloser Transportsysteme befahrenen Bereiches mit einer Vielzahl von Produktionsstätten und/oder Bearbeitungseinheiten bei einer Auslösung wenigstens eines von mehreren in diesem Bereich angeordneten NOT-AUS-Schaltern.

DE 10 2007 045143 A1 offenbart ein stationäres Förderband und dessen Synchronisation mit einem mitfahrenden Roboter. Bei einer Störung und einem Abbremsen des Förderbands wird die Synchronisation aufrechterhalten und der mitfahrende Roboter ebenfalls gebremst.

Es ist Aufgabe der vorliegenden Erfindung, eine verbesserte Sicherheitstechnik aufzuzeigen.

Die Erfindung löst diese Aufgabe mit den Merkmalen im Verfahrens- und Vorrichtungshauptanspruch.

Die beanspruchte Sicherheitstechnik, d.h. die Sicherheitseinrichtung und das Sicherheitsverfahren haben verschiedene Vorteile.

Die Sicherheitstechnik eignet sich besonders für eine Fertigungsstation, in die Fördermittel hinein und heraus fahren und Werkstücke in die Fertigungsstation und aus dieser heraus transportieren. Insbesondere können sich die Fördermittel dabei zu einer stationsinternen Arbeitsstelle bewegen, bei der ein Prozess an den einzeln oder mehrfach vorhandenen Werkstücken durchgeführt wird. Das Fördermittel kann während des Prozesses an der Arbeitsstelle verbleiben oder gewechselt werden.

Die beanspruchte Sicherheitstechnik verbindet die Sicherheitskreise der Fertigungsstation und des in der Fertigungsstation befindlichen Fördermittels.

Das Fördermittel wird als auslösendes und als abschaltbares Sicherheitselement eingebunden. Eine vom Fördermittel und seinem Sicherheitskreis ausgelöste Notabschaltung, sog. Notaus, wirkt dadurch auf den Sicherheitskreis der Fertigungsstation und sorgt für eine Stillsetzung der Fertigungsstation.

Andererseits führt ein Notaus der Fertigungsstation und ihres Sicherheitskreises zu einem Abschalten bzw. Stillsetzen des Fördermittels in der Fertigungsstation. Entsprechendes gilt für eine Fertigungsstation mit mehreren voneinander getrennten Fertigungszellen mit jeweils einem zelleneigenen Sicherheitsbereich im Sicherheitskreis. Bei einer mehrzelligen Fertigungsstation kann der Sicherheitskreis des Fördermittels bei Aufenthalt des Fördermittels in einer Fertigungszelle mit dem jeweils zelleneigenen Sicherheitsbereich verbunden werden und kann andererseits beim Zellenwechsel des Fördermittels temporär mit beiden zelleneigenen Sicherheitsbereichen verbunden werden.

Der Sicherheitskreis der Fertigungsstation kann eine weitere Bereichsaufteilung haben. An den Schleusen können jeweils weitere Sicherheitsbereiche gebildet werden. In den besagten Sicherheitsbereichen sind je nach Art des Sicherheitsfalls abgestufte Sicherheitsreaktionen bzw. Sicherheitsmaßnahmen möglich. Eine kleinere lokale Störung kann zu einem Stillsetzen einzelner Stations-oder Zellenkomponenten führen, wobei die anderen weiter im Automatikbetrieb arbeiten können. Ein Notaus wirkt bevorzugt stationsübergreifend.

Durch die Sicherheitstechnik kann ferner bei einem eigensicheren Fördermittel der Schutzbereich von dessen Schutzeinrichtung bei der Ein- und Ausfahrt sowie innerhalb der Fertigungsstation beeinflusst und verändert werden. Insbesondere kann der Schutzbereich bei der Einfahrt und beim Aufenthalt in der Fertigungsstation verkleinert und bei der Ausfahrt wieder vergrößert werden. Diese Ausbildung und Funktion einer Sicherheitstechnik hat eigenständige erfinderische Bedeutung und lässt sich auch bei anderen Sicherheitseinrichtungen und Sicherheitsverfahren einsetzen, insbesondere gemäß der jeweiligen Oberbegriffsmerkmale der selbstständigen Ansprüche.

Die Sicherheitseinrichtung weist eine Kommunikationseinrichtung für die Kommunikation zwischen der Fertigungsstation und dem Fördermittel auf. Mittels der Kommunikationseinrichtung kann eine Verbindung der besagten Sicherheitskreise durchgeführt werden. Die Sicherheitseinrichtung kann hierfür auch ein Steuermodul aufweisen. Dieses kann hardwaremäßig und/oder softwaremäßig ausgebildet sein. Bei der Verbindung der Sicherheitskreise und der bevorzugten drahtlosen Kommunikation über ein WLAN kann eine Busverbindung zwischen den Sicherheitskreisen, insbesondere zwischen den damit verbundenen Steuerungen der Fertigungsstation bzw. Fertigungszelle und des Fördermittels hergestellt werden.

Die Sicherheitstechnik kann ein im Bereich der Fertigungsstation befindliches Fördermittel erkennen und kann hierfür eine entsprechende Erkennungstechnik, d.h. eine Erkennungseinrichtung und ein Erkennungsverfahren, aufweisen. Mit der Erkennung kann insbesondere bei der Einfahrt und Ausfahrt sowie bei einem oder mehreren eventuellen Zellenwechsel ein Fördermittel als solches erkannt und von anderen sicherheitsrelevanten Objekten, insbesondere einem menschlichen Körper, unterschieden werden.

Die Erkennungstechnik kann in den Sicherheitskreis der Fertigungsstation bzw. der Fertigungszelle eingebunden sein. Hierüber kann z.B. ein unbefugter Zutritt eines Werkers an einer für die Einfahrt und/oder Ausfahrt eines Fördermittels vorgesehenen Schleuse in einer ansonsten umschließenden Schutzabtrennung einer Fertigungsstation bzw. einer Fertigungszelle festgestellt werden und zu einer Sicherheitsreaktion, insbesondere zu einem Notaus, führen.

Das Fördermittel kann außerdem identifiziert und lokalisiert werden. Die Sicherheitstechnik kann hierüber zur Einhaltung der Sicherheit gezielt Position und Weg des Fördermittels erfassen und steuern.

Dadurch kann das Verbinden und Trennen der Sicherheitskreise und/oder das Verkleinern und Vergrößern des Schutzbereichs der Schutzeinrichtung mit einem definierten Ortsbezug im Bereich der Fertigungsstation erfolgen.

Ferner kann erfasst werden, ob sich das Fördermittel zu einem vorgesehenen Zeitpunkt an einem vorgesehenen Ort im Stationsbereich befindet. Hieraus kann von der Sicherheitstechnik abgeleitet werden, ob das Fördermittel Fahrbefehle korrekt ausführt. Bei Nichterreichen des Fahrziels und bei Ausbleiben einer entsprechenden Rückmeldung wird ein potentielles Sicherheitsproblem angenommen und eine Sicherheitsmaßnahme, z.B. ein Notaus der Fertigungsstation und des Fördermittels, eingeleitet.

Ein für die Erkennung und/oder Unterscheidung eines Fördermittels eingesetztes Detektionsmittel, insbesondere eine Muting-Lichtschranke, kann an der besagten Schleuse einzeln oder bevorzugt mehrfach vorhanden sein. Vorteilhafterweise sind Detektionsmittel an Eingang und Ausgang einer Schleuse angeordnet. Sie können einen axialen Abstand haben, sodass bei Einfahren und Verlassen der Schleuse jeweils nur ein Detektionsmittel das Transportmittel detektiert und das jeweils andere Detektionsmittel seine Sicherheitsfunktion zur Abschirmung gegen einen unbefugten Werkerzutritt oder sonstigen Zutritt eines Fremdkörpers zur Fertigungsstation bzw. zur Fertigungszelle erfüllt.

Die Erkennungstechnik kann für eine Identifikation eines Fördermittels eine entsprechende Identifikationstechnik, d.h. eine Identifikationseinrichtung und ein Identifikationsverfahren, aufweisen. Bei der Identifikation wird die Identität eines Fördermittels bevorzugt mit seinem aktuellen Aufenthaltsort verknüpft. Hierüber kann bevorzugt erkannt werden, wo sich ein bestimmtes Fördermittel im Bereich der Fertigungsstation befindet.

Diese Identifikation kann vor und innerhalb einer Schleuse sowie auch an ein oder mehreren Stellen innerhalb der Fertigungsstation bzw. Fertigungszelle erfolgen. Die Identifikationstechnik kann mit entsprechenden Identifikationsmitteln die Position eines Fördermittels erfassen. Sie kann dabei auch dessen Identität erfassen. Alternativ oder zusätzlich kann die Identität vom Fördermittel gemeldet werden. Die Identifikation kann vom Fördermittel und/oder von der Fertigungsstation ausgeführt werden.

Eine Positionserfassung kann z.B. durch Kommunikation von mitgeführten Identifikationsmitteln am Fördermittel mit lokalen Identifikationsmitteln im Stationsbereich mit bekannter Position und/oder Identität erfolgen. Die Kommunikation kann ortsgebunden sein. Sie kann z.B. nur ausführbar sein, wenn die Identifikationsmittel sich in unmittelbarer Nähe zueinander befinden. Durch kommunikatives Erfassen der Identität eines lokalen Identifikationsmittels, z.B. durch Optokoppler oder Lesen von RFID-Tags, QR-Codes, Bar-Codes oder dgl., kann mittelbar die Position des Fördermittels im Stationsbereich erkannt werden.

Die Sicherheitstechnik kann ein Steuermodul aufweisen. Dieses kann hardwaretechnisch und/oder softwaretechnisch ausgebildet sein. Es kann der Fertigungsstation und dem Fördermittel zugeordnet sein und mit deren jeweiligem Sicherheitskreis verbunden sein. Das Steuermodul kann eigenständig ausgebildet und angeordnet sein oder kann in eine vorhandene Steuerung der Fertigungsstation und des Fördermittels implementiert werden, z.B. als Softwaremodul.

Eine Fertigungsstation und ein Fördermittel bzw. eine Fertigungsanlage können bei der Erstausrüstung oder im Wege einer Nachrüstung mit der beanspruchten Sicherheitstechnik ausgestattet werden.

Die Fertigungsstation kann eine stationsinterne Fertigungseinrichtung und eine Stationssteuerung sowie eine umgebende und mit einer oder mehreren Schleusen versehene Schutzabtrennung aufweisen. Bei einer Fertigungsstation mit mehreren Fertigungszellen kann zwischen den Fertigungszellen eine interne Schutzabtrennung mit einer Schleuse vorhanden sein. An dieser Schleuse kann ebenfalls eine Erkennungstechnik vorhanden sein. Die Fertigungszellen können jeweils einen zelleneigenen Sicherheitskreis aufweisen. Die Identifikationsmittel können innerhalb einer Schleuse und in einem an die Schleuse anschließenden, insbesondere externen, Bereich angeordnet sein.

Die Kommunikationseinrichtung kann eigenständig ausgebildet sein. Sie kann alternativ zum Teil oder vollständig in eine anderweitige Kommunikationseinrichtung integriert sein. Über die Kommunikationseinrichtung und über Kommunikationseinheiten an einer Steuerung des Fördermittels und an einer Stationssteuerung kann die sicherheitstechnische Kommunikation durchgeführt werden. Andererseits kann eine Kommunikation mit einer externen Steuerung, z.B. einer Anlagensteuerung oder einer Steuerung einer Fertigungseinrichtung erfolgen.

Die Fahrbewegungen des Fördermittels können von einer externen Steuerung einer Fördereinrichtung gesteuert werden. Die Sicherheitstechnik kann diese Steuerkommunikation beeinflussen, indem z.B. die Steuerung der Fördereinrichtung für ein in einer Fertigungsstation befindliches Fördermittel Fahraufträge nur von der Stationssteuerung entgegennimmt. Steuer- und Fahrbefehle für dieses Fördermittel können dann nur von der Stationssteuerung aus veranlasst werden. Eine Stationssteuerung kann bei einer mehrzelligen Fertigungsstation in zelleneigene Steuereinheiten hardwaremäßig und/oder softwaremäßig aufgeteilt werden. Hierbei kann eine Vorrang- oder Masterfunktion bei einer der zelleneigenen Steuereinheiten vorhanden sein.

Die Erfindung ist in den Zeichnungen beispielsweise und schematisch dargestellt. Es zeigen:
- Figur 1:: eine Schemadarstellung einer einzelligen Fertigungsstation mit einem Fördermittel und einer Sicherheitstechnik und
- Figur 2:: eine Variante einer Fertigungsstation mit mehreren Fertigungszellen.

Die Erfindung betrifft eine Sicherheitseinrichtung (5) und ein Sicherheitsverfahren für eine Fertigungsstation (2) und ein Fördermittel (18). Die Erfindung betrifft ferner eine Fertigungsanlage (1) mit einer oder mehreren Fertigungsstationen (2) und mit einer Fördereinrichtung (3) mit einem oder mehreren Fördermitteln (18). Die Erfindung betrifft außerdem ein zugehöriges Fertigungsverfahren.

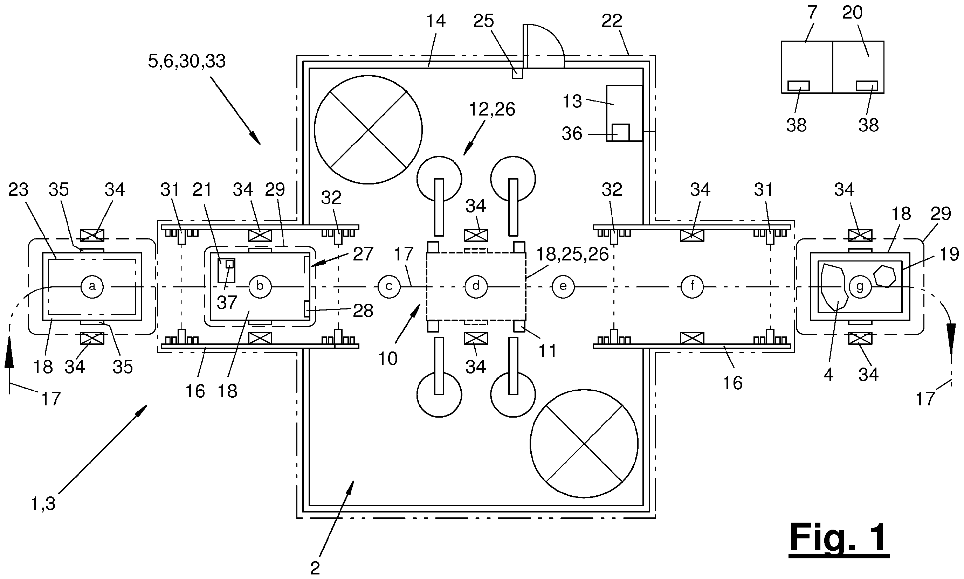

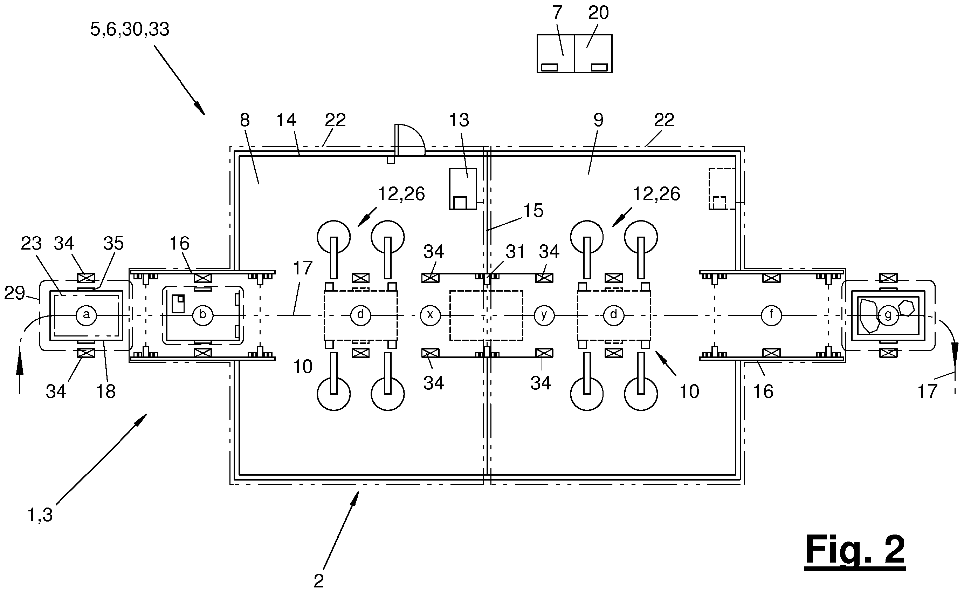

Die Fertigungsstation (2) kann unterschiedlich ausgebildet sein. In der Variante von Figur 1 weist sie eine einzelne Fertigungszelle auf. In der Ausführung von Figur 2 sind zwei oder mehr Fertigungszellen (8,9) vorhanden.

Die Fertigungsanlage (1) weist eine oder mehrere Fertigungsstationen (12) auf, von denen eine beispielhaft mit ihren Komponenten in Figur 1 näher dargestellt ist. Ferner weist die Fertigungsanlage (1) eine Fördereinrichtung (3) für den Transport von Werkstücken (4) auf. Diese umfasst ein oder mehrere Fördermittel (18) und einem Netz von Förderwegen (17), auf denen die Fördermittel (18) verkehren. Ferner kann die Fördereinrichtung (3) eine Steuerung (20) mit einem Flottenmanager für die Flotte von Fördermitteln (18) aufweisen. Die Fördermittel (18) sind individuell steuerbar und bewegen sich im Förderwegenetz auf frei programmierbaren Förderbahnen. Die Fördermittel (18) können in beliebig geeigneter Weise ausgebildet sein. Vorzugsweise sind sie als autonome, flurgebundene, fahrerlose Transportfahrzeuge (AGV oder FTF) ausgebildet.

Die Fertigungsanlage (1) kann außerdem einen Logistikbereich (nicht dargestellt) aufweisen, in dem Werkstücke (4) bereitgestellt, kommissioniert und auf Fördermittel (18) geladen werden. Sie kann weitere Komponenten beinhalten.

Im Zuge eines automatischen Fertigungsverfahrens können ein oder mehrere Werkstücke (4) in einer Folge von Fertigungsschritten mit unterschiedlichen Prozessen bearbeitet werden. Die Fertigungsschritte werden z.B. nacheinander in mehreren Fertigungsstationen (2) mit einem entsprechenden Zwischentransport der Werkstücke (4) durchgeführt. Alternativ können die Fertigungsschritte in einer einzelnen Fertigungsstation (2) erfolgen.

Die Fertigungsstation (2) weist mindestens eine stationsinterne Arbeitsstelle (10) und eine Fertigungseinrichtung (12) zur Durchführung eines beliebigen Prozesses an ein oder mehreren Werkstücken (4) auf. Die Fertigungseinrichtung (12) kann ein oder mehrere Industrieroboter zum Handhaben des oder der Werkstücke (4) und zur Prozessausführung mit ggf. wechselbaren Werkzeugen und in Figur 1 angedeutete Werkzeugmagazine aufweisen.

Diese Prozesse können unterschiedliche Techniken betreffen, z.B. Fügen, insbesondere Schweissen, Löten oder Kleben, Auftragen und Abtragen von Materialien, Wärmebehandlungen, Umformen, spanabhebende Bearbeitung, Assemblier- und Montagevorgänge oder dgl.. Ferner können die Fertigungsprozesse gleiche oder unterschiedliche Werkstücke (4), insbesondere Werkstücktypen, betreffen. Die zunächst getrennten Werkstücke (4) können zu einer oder mehreren Baugruppen gefügt werden.

Das oder die Werkstücke (4) werden von einem Fördermittel (18) in die Fertigungsstation (2) hinein- und wieder heraustransportiert. Das Fördermittel (18) bewegt sich dabei auf einem Förderweg (17) in die Fertigungsstation (2) hinein bis zur Arbeitsstelle (10) und wieder heraus. Die Ausfahrt kann an der Einfahrtstelle oder an einer anderen Stelle erfolgen. Insbesondere kann das Fördermittel (18) durch die Fertigungsstation (2) hindurchfahren. Vorzugsweise befindet sich nur jeweils ein einzelnes Fördermittel (18) in der Fertigungsstation (2). In den Zeichnungen sind abweichend mehrere Fördermittel (18) dargestellt, um die Ausbildungsdetails des Fördermittels besser erkennbar zu machen.

Die vorzugsweise mehrfach vorhandenen Werkstücke (4) befinden sich auf einem in Figur 1 schematisch angedeuteten Lastaufnahmemittel (19), welches auf dem Fördermittel (18) angeordnet ist. Die Anordnung ist bevorzugt lösbar. Dies ermöglicht einerseits einen Wechsel des Fördermittels (18). Andererseits kann an der Arbeitsstelle (10) zur exakten und prozessgerechten Positionierung des oder der Werkstücke (4) das Lastaufnahmemittel (19) an einem schematisch angedeuteten Gestell (11) aufgenommen und dabei vom Fördermittel (18) gelöst werden. Das Gestell (11) bildet eine Positioniervorrichtung und ist bevorzugt höhenverstellbar.

Das Lastaufnahmemittel (19) ist an das oder die Werkstücke (4) adaptiert. Vorzugsweise nimmt es mehrere Werkstücke (4) in einer kommissionierten, definierten und exakt positionierten Anordnung auf. Die Werkstücke (4) können gleich oder unterschiedlich ausgebildet sein.

Die Werkstücke (4) können in beliebiger Weise ausgebildet sein und beliebigen Zwecken dienen. Vorzugsweise handelt es sich um Karosseriebauteile für eine Fahrzeugkarosserie, insbesondere um Blechteile. Die Fertigungsstation (12) kann für die Fertigung von typflexiblen Werkstücken (4) vorgesehen und ausgebildet sein. Die Werkstücke (4), z.B. Seitenwandteile einer Fahrzeugkarosserie, sind dabei ähnlich oder gleichartig ausgebildet, wobei sie typspezifische Unterschiede haben. Hierdurch ist die Fertigung unterschiedlicher Karosserietypen, z.B. zweitürig oder viertürig, Cabriolet, Limousine oder dergleichen möglich. Die Fertigung kann im freien Mix geschehen, wobei die Fertigungsstation (2) entsprechend adaptiert werden kann.

Die Fertigungsstation (2) weist eine die Station seitlich umlaufend umschließende Schutzabtrennung (14) auf, die z.B. als Zaun ausgebildet ist und den unbefugten Zutritt von Personen in den inneren Stationsbereich verhindert. Die Schutzabtrennung (14) kann für die Ein- und Ausfahrt eines Fördermittels (18) unterbrochen sein und eine oder mehrere Schleusen (16) aufweisen. Diese können längliche Durchfahröffnungen mit seitlichen Schutzwänden oder einer Einhausung ausgebildet sein. Außerdem kann die Schutzabtrennung (14) überwachte und verschließbare Zugänge für Personen aufweisen.

Die Fertigungsstation (2) weist eine Stationssteuerung (13) auf. Die Fertigungsstation (2) kann zudem weitere für den Stationsbetrieb erforderliche Komponenten, wie Energieversorgung, Betriebsmittelversorgung, Prüfeinrichtungen oder dgl. aufweisen.

Die Fertigungsstation (2) besitzt einen Sicherheitskreis (22). Dieser ist mit der Stationssteuerung (13) verbunden. Der Sicherheitskreis (22) kann in mehrere Sicherheitsbereiche untergliedert sein.

Der Sicherheitskreis (22) weist mehrere auslösende Sicherheitselemente (25) auf, die ein Sicherheitsproblem detektieren und an die Steuerung des Sicherheitskreises, insbesondere die Stationssteuerung (13), über einen Kommunikationskanal, insbesondere einen Bus, melden. Ein solches Sicherheitselement (25) kann z.B. ein Überwachungsmittel sein, welches die Stellung und das Öffnen einer Zugangstüre in der Schutzabtrennung (14) überwacht.

Zum Sicherheitskreis (22) können ferner abschaltbare Sicherheitselemente (26) gehören, die in einem Sicherungsfall stillgesetzt oder abgeschaltet werden. Die Fertigungseinrichtung (12), insbesondere deren Industrieroboter, können z.B. in den Sicherheitskreis (22) als solches abschaltbares Sicherheitselement (26) eingebunden sein.

Das Fördermittel (23) kann einen eigenen Sicherheitskreis (23) und eine eigene damit verbundene Steuerung (21) aufweisen. In diesen Sicherheitskreis (23) können ebenfalls detektierende bzw. auslösende Sicherheitselemente und abschaltbare Sicherheitselemente, z.B. ein Fahrantrieb, eingebunden sein.

Insbesondere kann das Fördermittel (23) eine Schutzeinrichtung (27) aufweisen, die mit einer Sensorik (28), z.B. einem Laserscanner, die Umgebung des Transportmittels (18) in einem Schutzbereich (29) auf etwaige Hindernisse oder andere Sicherheitsprobleme abtastet. Die Reichweite der Sensorik bestimmt den Schutzbereich (29) und kann verändert werden.

Das Fördermittel (18) kann eine Eigensicherheit aufweisen und kann für den normalen Bewegungs- und Fahrbetrieb außerhalb der Fertigungsstation (12) einen breiten bzw. tiefen Schutzbereich (29) aufweisen, der das Transportmittel (18) zumindest stellenweise, vorzugsweise rundum, umgibt.

Die Sicherheitskreise (22,23) können zu einer Sicherheitstechnik gehören. Diese beinhaltet eine Sicherheitseinrichtung (5) und ein Sicherheitsverfahren. Die Sicherheitstechnik verbindet die Sicherheitskreise (22,23) der Fertigungsstation (2) und des Fördermittels (18), wenn sich dieses in der Fertigungsstation (2), insbesondere an der Arbeitsstelle (10), befindet. Das Verbinden der Sicherheitskreise (22,23) kann auch bereits bei der Einfahrt erfolgen. Bei der Ausfahrt und bei Verlassen der Fertigungsstation (2) trennt die Sicherheitseinrichtung wieder die Sicherheitskreise (22,23).

Die Sicherheitseinrichtung (5) weist ein Steuermodul (24) auf, welches die Funktionen der Sicherheitseinrichtung (5) und ihrer Komponenten steuert. Das Steuermodul (24) kann hardwaremäßig und/oder softwaremäßig ausgebildet sein. Es kann eigenständig ausgebildet und angeordnet sein. In den Ausführungsbeispielen besteht es aus Softwaremodulen, die in die Stationssteuerung (13) und ggf. die Steuerung (21) des Fördermittels (18) implementiert sind.

Bei der Verbindung der Sicherheitskreise (22,23) wird das Fördermittel (18) einerseits als auslösendes Sicherheitselement (25) und andererseits als abschaltbares Sicherheitselement (26) eingebunden. Die Beeinflussung der verbundenen Sicherheitskreise (22,23) erfolgt gegenseitig. Bei einem Sicherheitsfall, insbesondere einem Notaus, des stationseigenen Sicherheitskreises (22) wird der Sicherheitskreis (23) des Fördermittels (18) beaufschlagt und bewirkt ein Stillsetzen oder Abschalten des Fördermittels (18) oder einzelner seiner Komponenten. Umgekehrt wird ein vom Sicherheitskreis (23) des Fördermittels (18) detektierter Sicherheitsfall und evtl. ausgelöster Notaus an den stationsinternen Sicherheitskreis (22) übermittelt und führt dort zu einer entsprechenden Sicherheitsreaktion, insbesondere einem Notaus.

Die Sicherheitseinrichtung (5) weist eine Kommunikationseinrichtung (6) für die Kommunikation zwischen der Fertigungsstation (2) und dem Fördermittel (18) auf. Hierüber können insbesondere die Sicherheitskreise (22,23) verbunden werden und miteinander kommunizieren. Die Kommunikation erfolgt zwischen den Steuerungen (13,21) der Fertigungsstation (2) und des Fördermittels (18). Hierfür können an geeigneter Stelle, insbesondere an den Steuerungen (13,21) integriert, Kommunikationseinheiten (36,37) angeordnet sein.

Die Kommunikationseinrichtung (6) kann eigenständig und separat ausgebildet und angeordnet sein. Sie kann alternativ teilweise oder vollständig Bestandteil einer anderweitig vorhandenen Kommunikationseinrichtung sein. Insbesondere kann dies eine Kommunikation mit einer externen und übergeordneten Steuerung betreffen, die z.B. als Anlagensteuerung (7) einer Fertigungsanlage (1) und/oder als Steuerung (20) der Fördereinrichtung (3) ausgebildet sein kann. Die Anlagensteuerung (7) und/oder die Steuerung (20) kann ebenfalls eine Kommunikationseinheit (36,38) aufweisen.

Die Kommunikation der Einheiten (36,37,38) kann leitungsgebunden oder drahtlos erfolgen. Bevorzugt wird eine drahtlose Kommunikation, z.B. per Funk. Sie kann bevorzugt auch zwischen den Steuerungen (13,21) im Rahmen eines WLAN bzw. einer WLAN-Verbindung erfolgen. Bei dieser Kommunikation kann eine Busverbindung zwischen den Sicherheitskreisen (22,23) und den Steuerungen (13,21) aufgebaut werden. Die Sicherheitskreise (22,23) können ihrerseits ein Bussystem aufweisen. Als Bussystem eignet sich z.B. der Profinet-Bus.

Die Sicherheitseinrichtung (5) weist eine Erkennungstechnik für ein im Bereich der Fertigungsstation (2) befindliches Fördermittel (18) auf. Die Erkennungstechnik beinhaltet eine Erkennungseinrichtung (30) und ein Erkennungsverfahren. Mit der Erkennungseinrichtung (30) kann ein Fördermittel (18) als solches erkannt und von anderen Objekten unterschieden werden. Insbesondere ist eine Unterscheidung gegenüber Personen möglich. Die Erkennungstechnik kann in den stationsseitigen Sicherheitskreis (22) eingebunden sein.

Die Sicherheitseinrichtung (5) kann ferner eine Identifikationstechnik für die Identifizierung eines Fördermittels (18) aufweisen, wobei die Sicherheitstechnik die Identität und/oder die aktuelle Position des Fördermittels (18), bevorzugt die Identität und die aktuelle Position des Fördermittels (18) erkennt. Die Identifikationstechnik beinhaltet eine Identifikationseinrichtung (33) und ein Identifikationsverfahren.

Die Erkennungseinrichtung (30) weist ein Detektionsmittel (31,32) auf, welches die besagte Erkennung eines Fördermittels (18) durchführt. Das Detektionsmittel (31,32) ist z.B. an einer Schleuse (16) in einer Schutzabtrennung (14,15) der Fertigungsstation (2) angeordnet. Das Detektionsmittel (31,32) kann einzeln oder mehrfach vorhanden sein. In den gezeigten Ausführungsformen sind an einer Schleuse (16) zwei Detektionsmittel (31,32) angeordnet und befinden sich mit gegenseitigem axialen Abstand am Eingang und Ausgang der Schleuse (16). Sie detektieren das durch die Schleuse (16) fahrende Fördermittel (18). Der axiale Abstand in Fahrtrichtung ist bei entsprechender Schleusenlänge so groß, dass das Fördermittel (18) in zentraler Schleusenposition keines der Detektionsmittel (31,32) auslöst.

Das Detektionsmittel (31,32) kann in beliebig geeigneter Weise ausgebildet sein. In den gezeigten Ausführungsbeispielen handelt es sich um eine Muting-Lichtschranke. Diese besteht aus zumindest einer zentralen Lichtschranke und beidseits in Förder- und Schleusenrichtung anschließenden weiteren Sensoren, z.B. weiteren Lichtschranken. Ein Fördermittel (18) und dessen Form können durch ihr Unterbrechungsverhalten der Lichtschranken erkannt und von kürzeren Objekten unterschieden werden. Hierbei kann beobachtet werden, welche Lichtschranken oder andere Sensoren in der Reihe frei und welche unterbrochen sind. Ferner kann der Zeitfaktor für die Dauer einer Unterbrechung aufgenommen werden und in die Erkennung einfließen.

Bei einer Doppelanordnung von Detektionsmitteln (31,32) an einer Schleuse (16) kann eine Muting-Funktion nur bei einem, z.B. dem äußeren Detektionsmittel (31) vorhanden sein. Bei der mehrzelligen Fertigungsstation (2) von Figur 2 kann an der Übergangsstelle zwischen den Fertigungszellen (8,9) und einer evtl. dortigen Schleuse (16) mindestens ein Detektionsmittel (31) angeordnet sein. Es kann eine Muting-Funktion umfassen, muss aber nicht. Das einzelne Detektionsmittel (31), wie auch das innere Detektionsmittel (32), kann alternativ als einfache Sensorik, z.B. Lichtschranke, ohne diese Funktion ausgebildet sein.

Die Identifikationseinrichtung (33) weist Identifikationsmittel (34,35) an der Fertigungsstation (2) und am Fördermittel (18) auf. Die einen Identifikationsmittel (34) sind z.B. an der Fertigungsstation (2) in bekannter und definierter Position sowie vorzugsweise stationär angeordnet. Die Identifikationsmittel (34) sind mehrfach im Stationsbereich vorhanden und haben jeweils eine eigene Identität. Sie sind als ortsgebundene ID-Geber, z.B. RFID-Tags im Boden oder an anderer Stelle, ausgebildet.

Die anderen Identifikationsmittel (35) sind z.B. als zugeordnete Leseeinrichtung zum Auslesen der ID-Codes der Identifikationsmittel (34) ausgebildet. Die Identifikationsmittel (35) sind beweglich oder fest und an den Fördermitteln (18) angeordnet. Die Zuordnung und Kinematik der Identifikationsmittel (34,35) kann auch umgedreht sein. Zudem kann die konstruktive Ausbildung der Identifikationsmittel (34,35) variieren. Sie können z.B. als Optokoppler ausgebildet sein.

Die Kommunikation der Identifikationsmittel (34,35) ist räumlich begrenzt. Sie kann nur erfolgen, wenn sich die Identifikationsmittel (34,35) in unmittelbarer Nachbarschaft zueinander befinden. Die Übermittlung des ID-Codes ist dadurch mit einer Orts-Information über die aktuelle Position des Fördermittels verknüpft und kann von der Sicherheitstechnik entsprechend ausgewertet werden.

Die Steuerung (21) des Fördermittels (18) ist mit dem Identifikationsmittel (35) verbunden. Sie kann den erfassten ID-Code des stationären Identifikationsmittels (34) über die Kommunikationseinrichtung (6) an die Stationssteuerung (13) melden. Sie kann dabei auch die eigene Identität des Fördermittels (18) bzw. einen ID-Code mitteilen. Durch die beiden Informationen erkennt die Stationssteuerung (13) bzw. die Sicherheitseinrichtung (5) die Identität des Fördermittels (18) und dessen aktuellen Aufenthaltsort bzw. Position.

In den gezeigten Ausführungsformen sind die codierten Identifikationsmittel (34) z.B. in einer Schleuse (16) und in dem davor liegenden Bereich außerhalb der Fertigungsstation (2) angeordnet. Die Identifikationsmittel (34) sind z.B. paarweise und beidseits neben dem Förderweg (17) angeordnet. In einer Schleuse (16) ist eine in Transportrichtung bevorzugt zentrale Anordnung vorgesehen.

Die z.B. lesenden Identifikationsmittel (35) sind vorzugsweise ebenfalls paarweise und dabei an den beiden Längsseiten des Fördermittels (18) angeordnet. Auch hier wird eine in Längsrichtung zentrale Anordnung bevorzugt. Die räumliche Anordnung der Identifikationsmittel (34,35) ist derart gewählt, dass sie bei einer Fahrt des Fördermittels (18) entlang des Förderwegs (17) miteinander kommunizieren können, bevorzugt im Stand. Eine Kommunikation ist aber auch während der Fahrt, also "On-The-Fly" möglich. Ihre Längserstreckung ist begrenzt, so dass sich eine quasi punktförmige Anordnung ergibt. Über die bekannte stationäre Position der Identifikationsmittel (34) kann somit auch bei einem Lesevorgang und einem entsprechend exakt positionierten Fördermittel (18) dessen Position detektiert werden. Denkbar wäre auch eine Anordnung der lesenden Identifikationsmittel (35) unterhalb des Fördermittels (18) bzw. innerhalb des Fördermittels (18) möglicherweise mit Ausrichtung nach unten, sodass entsprechend mit den, bevorzugt am oder im Boden angeordneten, Identifikationsmittel (34) kommuniziert werden kann.

Weitere stationsseitige Identifikationsmittel (34) können an einer oder mehreren Stellen im Innenraum des Fertigungsstation (2) angeordnet sein, z.B. an der Arbeitsstelle (10) oder an Zwischenpositionen des Förderwegs (17) bzw. des Fahrwegs zwischen Schleuse (16) und Arbeitsstelle (10). Hierdurch ist ermöglicht, dass die Position des Fördermittels (18) auch innerhalb der Fertigungsstation (2) ermittelt werden kann.

Die Sicherheitseinrichtung (5) kann die Eigensicherheit eines Transportmittels (18) im Stationsbereich verändern. Hierfür kann z.B. der Schutzbereich (29) in seiner Breite bzw. Tiefe verkleinert werden. Wenn das Transportmittel (18) in eine Schleuse (16) einfährt und über die Erkennungseinrichtung (30) erkannt wird, kann die Stationssteuerung (13) über die Steuerung (21) des Fördermittels (18) den Schutzbereich (29) verkleinern. Dies erleichtert die Navigation des Fördermittels (18) innerhalb der Fertigungsstation (2) und insbesondere an der Arbeitsstelle (10) und dem dortigen Gestell (11).

Die Schutzbereichsverkleinerung kann mit der besagten Verbindung der Sicherheitskreise (22,23) einhergehen. Bei einer Verkleinerung des Schutzbereichs (29) ist die Eigensicherheit nicht oder nicht mehr im vollen Umfang gegeben. Dies kann durch die Einbindung in den stationsseitigen Sicherheitskreis (22) und dessen Überwachungsmittel (25) kompensiert werden. Bei Verlassen der Fertigungsstation (2), insbesondere bei der Erkennung eines Fördermittels (18) in einer Schleuse (16), kann der Schutzbereich (29) dann wieder vergrößert werden, so dass das Fördermittel (18) für die weitere Fahrt außerhalb der Fertigungsstation (12) wieder seine Eigensicherheit erlangt.

Bei der Variante von Figur 2 ist die Fertigungsstation (2) in zwei oder mehr Fertigungszellen (8,9) unterteilt. Sie ist dabei wiederum von einer Schutzabtrennung (14) mit einer oder mehreren Schleusen (16) außenseitig umgeben. Zwischen den Fertigungszellen (8,9) ist eine stationsinterne Schutzabtrennung (15) angeordnet, die ebenfalls eine Schleuse (16) der vorbeschriebenen Art aufweisen kann. Diese kann auch die vorbeschriebene Erkennungstechnik (30) mit der Detektions- und Identifikationstechnik aufweisen. Ein einzelnes Detektionsmittel (31) ist z.B. mittig an der Schleuse (16) angeordnet. Stationsseitige Identifikationsmittel (34) befinden sich an den Schleusenenden.

Die Fertigungszellen (8,9) können jeweils eine Arbeitsstelle (10) und eine Fertigungseinrichtung (12) der vorbeschriebenen Art aufweisen. Jede Fertigungszelle (8,9) kann ihren eigenen Sicherheitsbereich innerhalb des stationsübergreifenden Sicherheitskreis (22) aufweisen. Die Stationssteuerung (13) kann bei einer mehrzelligen Fertigungsstation (2) in angedeutete zelleneigene Steuereinheiten hardwaremäßig und/oder softwaremäßig aufgeteilt werden. Der zelleneigene Sicherheitsbereich (22) ist jeweils mit der zelleneigenen Steuereinheit verbunden. Eine dieser Steuereinheiten kann eine Vorrang- oder Masterfunktion haben. Ferner kann bei der mehrzelligen Fertigungsstation (2) der Sicherheitskreis (22) einen zellenübergreifenden gemeinsamen Notaus-Kreis aufweisen.

Nachfolgend wird der Ablauf einer Einfahrt eines Fördermittels (18) in eine Fertigungsstation gemäß Figur 1 beschrieben.

Ein eventuell vorhandener und übergeordneter und z.B. in der Anlagensteuerung (7) angeordneter Warehousemanager erteilt der Steuerung (20) bzw. dem Flottenmanager den Befehl, ein Fördermittel (18) auf eine Position (a) vor der Einfahrt in die Fertigungsstation (2) und deren Schleuse (16) zu kommandieren und einen entsprechenden Fahrbefehl an das Fördermittel (18) mittels der Kommunikationseinrichtung (6) abzusetzen. Das Fördermittel (18) meldet an die Steuerung (20) bzw. den Flottenmanager das Erreichen der Position (a). Der Flottenmanager meldet an den Warehousemanager, dass der Fahrauftrag abgearbeitet ist. Der Warehousemanager meldet der Stationssteuerung (13), welches Fördermittel (18), bevorzugt mit welchem Lastaufnahmemittel (19) und weiterhin bevorzugt mit welcher Werkstückkonfiguration, vor der Einfahrt steht und welcher Prozess an der Arbeitsstelle (10) an den Werkstücken (4) durchgeführt werden soll. Der Informationsaustausch erfolgt auch hier über die Kommunikationseinrichtung (6).

Die Stationssteuerung (13) kommuniziert mit der Steuerung (21) des Fördermittels (18), wobei eine Busverbindung per WLAN hergestellt wird. Ferner fragt die Stationssteuerung (13) die Steuerung (21) des Fördermittels nach den ID-Codes der stationären und z.B. an der Position (a) im Boden eingelassenen Identifikationsmittel (34) bzw. ID-Geber. Die Steuerung (21) des Fördermittels (18) liest über ihre Identifikationsmittel (35) die besagten ID-Codes aus und meldet diese zusammen mit dem ID-Code des Fördermittels (18) an die Stationssteuerung (13) zur Prüfung. Stimmen diese mit der Vorgabe überein, wird das Fördermittel (18) als ein zugehöriges und tatsächlich für den Fertigungsablauf vorgesehenes Fördermittel (18) identifiziert und außerdem über das Auslesen der ID-Codes mit seiner Position erfasst. Bei Übereinstimmung der ID-Codes werden die Sicherheitskreise (22,23) der Fertigungsstation (2) und des Fördermittels (18) verbunden.

Die Stationssteuerung (13) sendet ferner eine Lock-Anfrage an den Flottenmanager, so dass dieser für das betreffende Fördermittel (18) nur noch Fahraufträge annimmt, die von der Stationssteuerung (13) kommen. Andere Fahraufträge, z.B. vom Warehousemanager oder von anderer Stelle, werden geblockt. Die Stationssteuerung (13) befiehlt anschließend der Steuerung (20) bzw. dem Flottenmanger, das Fördermittel (18) in die Einfahr-Schleuse (16) zu fahren, was der Flottenmanager durch einen Fahrbefehl an das Fördermittel (18) veranlasst. Denkbar wäre auch, dass anstelle des Blockens der Fahraufträge von anderen Stellen, nur solche Fahraufträge zugelassen werden, die eindeutig als ursprünglich von der Stationssteuerung (13) kommend identifizierbar sind, somit indirekt von der Stationssteuerung (13) kommen. Bei der Einfahrt durchfährt das Fördermittel (18) das äußere Detektionsmittel (31), wobei die mit der Erkennungseinrichtung (30) verbundene Stationssteuerung (13) die besagte Erkennung und das sogenannte Muting steuert und überwacht. Die Steuerung (21) meldet an die Steuerung (20) bzw. den Flottenmanager das Erreichen der Schleuse (16) und die Einnahme der Position (b). Der Flottenmanager meldet seinerseits an die Stationssteuerung (13) den Abschluss des Fahrauftrags für das betreffende Transportmittel (18).

Die Stationssteuerung (13) fragt die Steuerung (21) in der vorbeschriebenen Weise nach den ID-Codes der nun im Schleusenbereich befindlichen Identifikationsmittel (34), die entsprechend ausgelesen und an die Stationssteuerung (13) rückgemeldet sowie durch Überprüfung der ID-Codes ausgewertet werden. Bei Übereinstimmung befiehlt die Stationssteuerung (13) der Steuerung (21) des Fördermittels (18) den Schutzbereich (29) zu reduzieren, was nach Vollzug durch Rückmeldung quittiert wird. Die Stationssteuerung (13) veranlasst in der vorbeschriebenen Weise über den Flottenmanager die Einfahrt des Fördermittels (18) in die Fertigungsstation (2) und an die Arbeitsstelle (10) sowie die dortige Position (d). Hierbei kann eventuell eine Zwischenposition (c) eingenommen und zu Kontrollzwecken erfasst werden. Beim Verlassen der Schleuse (16) durchfährt das Fördermittel (18) das ggf. vorhandene zweite und innere Detektionsmittel (32), wobei das Muting in der vorbeschriebenen Weise gesteuert und überwacht wird.

Das Fördermittel (18) kann während oder nach Abschluss der Prozesse an den Werkstücken (4) aus der Fertigungsstation (2) in Rückwärts- oder Vorwärtsfahrt ausfahren, was von der Stationssteuerung (13) in Zusammenarbeit mit der Steuerung (20) bzw. dem Flottenmanager veranlasst wird. Hierbei finden auch die vorbeschriebenen Muting-, Erkennungs- und Identifikationsvorgänge statt.

Bei Durchführung der Identifikation in der Ausfahrschleuse (16) und Übereinstimmung der ID-Codes wird der Schutzbereich (29) wieder vergrößert und das Transportmittel (18) eigensicher gemacht und dies durch Rückmeldung quittiert. Das Transportmittel (18) nimmt bei der Ausfahrt die Positionen (e), (f) und (g) ein. Bei Erreichen der Position (g) außerhalb der Schleuse (16) trennt die Sicherheitstechnik wieder die Sicherheitskreise (22,23). Außerdem wird die Auftragsblockade für das nun nicht mehr in der Fertigungsstation (2) befindliche Fördermittel (18) wieder aufgehoben, so dass dessen weitere Bewegung durch den Warehousemanager oder von anderer Seite bzw. Stelle beauftragt und über die Steuerung (20) kommandiert werden kann.

Bei der mehrzelligen Variante der Fertigungsstation (2) von Figur 2 sind die Abläufe bei Einfahrt und Ausfahrt eines Fördermittels (18) in und aus der Fertigungsstation (2) die gleichen wie bei Figur 1. Beim Zellenwechsel und der Einfahrt des Fördermittels (18) in die nächste Zelle (9) erfolgt wegen der zelleneigenen Sicherheitskreise (22,23) eine Ummeldung. Hierzu wird das in der ersten Fertigungszelle (8) befindliche Fördermittel (18) über die Steuerung (13,20) in die Ummeldeposition (x) vor oder am Eingang der stationsinternen Schleuse (16) kommandiert. Nach deren Erreichen und Rückmeldung wird der Sicherheitskreis (23) des Fördermittels (18) mit beiden zelleneigenen Sicherheitskreisen (22) der beiden Fertigungszellen (8,9) verbunden. Anschließend wird in der erwähnten Weise das Fördermittel (18) an die am Schleusenausgang befindliche zweite Ummeldeposition (y) kommandiert, bei deren Erreichen der Sicherheitskreis der ersten und nun verlassenen Fertigungszelle (18) abgetrennt wird und nur noch eine Verbindung des Sicherheitskreises (2) der zweiten Fertigungszelle (9) und dem Sicherheitskreis (23) des Fördermittels (18) besteht.

Abwandlungen der gezeigten und beschriebenen Ausführungsformen sind in verschiedener Weise möglich. Insbesondere können die technischen Ausgestaltungen der Sicherheitseinrichtung (5), der Erkennungs- und Identifikationseinrichtung (30,33) abgewandelt werden. Das stationäre Identifikationsmittel (34) kann z.B. die Kommunikation und Lesefunktion für den im bewegten Identifikationsmittel (35) hinterlegten ID-Code des Transportmittels (18) übernehmen und diesen zusammen mit seinem eigenen ID-Code an die Stationssteuerung (13) bzw. Sicherheitseinrichtung (5) melden. Ferner können die Merkmale der vorbeschriebenen Ausführungsbeispiele und der genannten Abwandlungen beliebig miteinander kombiniert und gegebenenfalls vertauscht werden.

### BEZUGSZEICHENLISTE

- 1.): Fertigungsanlage
- 2.): Fertigungsstation
- 3.): Fördereinrichtung
- 4.): Werkstück, Karosseriebauteil
- 5.): Sicherheitseinrichtung
- 6.): Kommunikationseinrichtung
- 7.): Anlagensteuerung
- 8.): Fertigungszelle
- 9.): Fertigungszelle
- 10.): Arbeitsstelle
- 11.): Gestell
- 12.): Fertigungseinrichtung
- 13.): Stationssteuerung
- 14.): Schutzabtrennung Station
- 15.): Schutzabtrennung Zellen
- 16.): Schleuse
- 17.): Förderweg
- 18.): Fördermittel, AGV
- 19.): Lastaufnahmemittel
- 20.): Steuerung Fördereinrichtung, Flottenmanager
- 21.): Steuerung Fördermittel
- 22.): Sicherheitskreis Fertigungsstation
- 23.): Sicherheitskreis Fördermittel
- 24.): Steuermodul
- 25.): Sicherheitselement auslösend, Überwachungsmittel
- 26.): Sicherheitselement abschaltbar
- 27.): Schutzeinrichtung
- 28.): Sensorik, Laserscanner
- 29.): Schutzbereich
- 30.): Erkennungseinrichtung
- 31.): Detektionsmittel, Muting-Lichtschranke außen
- 32.): Detektionsmittel, Muting-Lichtschranke innen
- 33.): Identifikationseinrichtung
- 34.): Identifikationsmittel, ID-Geber, RFID-Tag
- 35.): Identifikationsmittel, Leseeinrichtung
- 36.): Kommunikationseinheit Station
- 37.): Kommunikationseinheit Fördermittel
- 38.): Kommunikationseinheit Anlagensteuerung

## Patentansprüche

1. Sicherheitseinrichtung (5) für eine Fertigungsstation (2) von Werkstücken (4), insbesondere Karosseriebauteilen, und für ein in die Fertigungsstation (2) ein- und ausfahrbares Fördermittel (18) zum Transport der Werkstücke (4) in und aus der Fertigungsstation (2), wobei die Fertigungsstation (2) und die Fördermittel (18) jeweils eine eigene Steuerung (13,21) und einen eigenen Sicherheitskreis (22,23) aufweisen, wobei die Sicherheitseinrichtung (5) die Sicherheitskreise (22,23) der Fertigungsstation (2) und des in der Fertigungsstation (2) befindlichen Fördermittels (18) verbindet und **dadurch gekennzeichnet dass** bei der Verbindung der Sicherheitskreise (22,23) das Fördermittel (18) als auslösendes und als abschaltbares Sicherheitselement (25,26) eingebunden wird.

2. Sicherheitseinrichtung (5) nach Anspruch 1, **dadurch gekennzeichnet, dass** die Sicherheitseinrichtung (5) einen Schutzbereich (29) einer Schutzeinrichtung (27) eines eigensicheren Fördermittels (18) bei der Ein- und Ausfahrt und innerhalb der Fertigungsstation (2) beeinflusst und verändert.

3. Sicherheitseinrichtung (5) nach Anspruch 1 oder 2, **dadurch gekennzeichnet, dass** die Sicherheitseinrichtung (5) eine Kommunikationseinrichtung (6) für die Kommunikation zwischen der Fertigungsstation (2) und dem Fördermittel (18) aufweist.

4. Sicherheitseinrichtung (5) nach Anspruch 1, 2 oder 3, **dadurch gekennzeichnet, dass** die Sicherheitseinrichtung (5) eine Erkennungseinrichtung (30) mit einem Detektionsmittel (31,32) für die Erkennung eines im Bereich der Fertigungsstation (2) befindlichen Fördermittels (18) aufweist.

5. Sicherheitseinrichtung (5) nach Anspruch 4, **dadurch gekennzeichnet, dass** das Detektionsmittel (31,32) an einer Schleuse (16) in einer Schutzabtrennung (14,15) der Fertigungsstation (2) angeordnet ist.

6. Sicherheitseinrichtung (5) nach Anspruch 5, **dadurch gekennzeichnet, dass** das oder jeweils ein Detektionsmittel (31,32) an Eingang und Ausgang einer Schleuse (16) angeordnet ist.

7. Sicherheitseinrichtung (5) nach Anspruch 4, 5 oder 6, **dadurch gekennzeichnet, dass** das Detektionsmittel (31,32) als Muting-Lichtschranke ausgebildet ist.

8. Sicherheitseinrichtung (5) nach einem der Ansprüche 4 bis 7, **dadurch gekennzeichnet, dass** die Erkennungseinrichtung (30) eine Identifikationseinrichtung (33) für die Identitäts- und/oder Positionserfassung, bevorzugt Identitäts- und Positionserfassung eines Fördermittels (18) aufweist.

9. Sicherheitseinrichtung (5) nach Anspruch 8, **dadurch gekennzeichnet, dass** die Identifikationseinrichtung (33) Identifikationsmittel (34,35) an der Fertigungsstation (2) und am Fördermittel (18) aufweist, die als ID-Geber und als Leseeinrichtung ausgebildet sind.

10. Sicherheitseinrichtung (5) nach einem der vorhergehenden Ansprüche, **dadurch**
**gekennzeichnet, dass** die Sicherheitseinrichtung (5) ein Steuermodul (24) aufweist.

11. Verfahren zum Sichern einer Fertigungsstation (2) für Werkstücke (4), insbesondere Karosseriebauteile, und eines in die Fertigungsstation (2) ein- und ausfahrenden Fördermittels (18), welches Werkstücke (4) in und aus der Fertigungsstation (2) transportiert, wobei die Fertigungsstation (2) und die Fördermittel (18) jeweils eine eigene Steuerung (13,21) und einen eigenen Sicherheitskreis (22,23) aufweisen, wobei die Sicherheitskreise (22,23) der Fertigungsstation (2) und des in der Fertigungsstation (2) befindlichen Fördermittels (18) verbunden werden, **dadurch gekennzeichnet dass** bei der Verbindung der Sicherheitskreise (22,23) das Fördermittel als auslösendes und als abschaltbares Sicherheitselement (25,26) eingebunden wird.

12. Verfahren nach Anspruch 11, **dadurch gekennzeichnet, dass** der Schutzbereich (29) einer Schutzeinrichtung (27) eines eigensicheren Fördermittels (18) bei der Einfahrt und innerhalb der Fertigungsstation (2) verkleinert und bei der Ausfahrt wieder vergrößert wird.

13. Verfahren nach Anspruch 11 oder 12, **dadurch gekennzeichnet, dass** bei einer mehrzelligen Fertigungsstation (2) mit zelleneigenen Sicherheitskreisen (22) der Sicherheitskreis (23) des Fördermittels (18) bei Aufenthalt des Fördermittels (18) in einer Fertigungszelle (8,9) mit dem jeweils zelleneigenen Sicherheitskreis (22) verbunden und beim Zellenwechsel des Fördermittels (18) temporär mit beiden zelleneigenen Sicherheitskreisen (22) verbunden wird und bei der Verbindung der Sicherheitskreise (22,23) das Fördermittel (18) als auslösendes und als abschaltbares Sicherheitselement (25,26) eingebunden wird.

14. Fertigungsanlage mit einer Fertigungsstation (2) für Werkstücke (4), insbesondere Karosseriebauteile, und einer Fördereinrichtung (3) mit einem in die Fertigungsstation (2) einfahrbaren Fördermittel (18) zum Transport der Werkstücke (4) in und aus der Fertigungsstation (2), wobei die Fertigungsstation (2) und das Fördermittel (18) jeweils eine eigene Steuerung (13,21) und einen eigenen Sicherheitskreis (22,23) aufweisen, und wobei die Fertigungsanlage (1) eine Sicherheitseinrichtung (5) nach einem der Ansprüche 1 bis 10 aufweist.

## Claims

1. Safety device (5) for a production station (2) of workpieces (4), in particular vehicle body parts, and for a conveying means (18) which can be moved into and out of the production station (2) and is intended to transport the workpieces (4) into and out of the production station (2), wherein the production station (2) and the conveying means (18) each have their own controller (13, 21) and their own safety circuit (22, 23), wherein the safety device (5) connects the safety circuits (22, 23) of the production station (2) and of the conveying means (18) situated in the production station (2), **characterized in that**, when connecting the safety circuits (22, 23), the conveying means (18) is incorporated as a tripping and disconnectable safety element (25, 26).

2. Safety device (5) according to Claim 1, **characterized in that** the safety device (5) influences and changes a protection region (29) of a protection device (27) of an intrinsically safe conveying means (18) during entry and exit and inside the production station (2).

3. Safety device (5) according to Claim 1 or 2, **characterized in that** the safety device (5) has a communication device (6) for communication between the production station (2) and the conveying means (18).

4. Safety device (5) according to Claim 1, 2 or 3, **characterized in that** the safety device (5) has a recognition device (30) with a detection means (31, 32) for recognizing a conveying means (18) situated in the region of the production station (2).

5. Safety device (5) according to Claim 4, **characterized in that** the detection means (31, 32) is arranged on an airlock (16) in a protective partition (14, 15) of the production station (2).

6. Safety device (5) according to Claim 5, **characterized in that** the detection means or in each case one detection means (31, 32) is arranged at the entrance and exit of an airlock (16).

7. Safety device (5) according to Claim 4, 5 or 6, **characterized in that** the detection means (31, 32) is in the form of a muting light barrier.

8. Safety device (5) according to one of Claims 4 to 7, **characterized in that** the recognition device (30) has an identification device (33) for capturing the identity and/or position, preferably capturing the identity and position of a conveying means (18).

9. Safety device (5) according to Claim 8, **characterized in that** the identification device (33) has identification means (34, 35) on the production station (2) and on the conveying means (18), which identification means are in the form of an ID transponder and a reading device.

10. Safety device (5) according to one of the preceding claims, **characterized in that** the safety device (5) has a control module (24).

11. Method for protecting a production station (2) for workpieces (4), in particular vehicle body parts, and a conveying means (18) which moves into and out of the production station (2) and transports workpieces (4) into and out of the production station (2), wherein the production station (2) and the conveying means (18) each have their own controller (13, 21) and their own safety circuit (22, 23), wherein the safety circuits (22, 23) of the production station (2) and of the conveying means (18) situated in the production station (2) are connected, **characterized in that**, when connecting the safety circuits (22, 23), the conveying means is incorporated as a tripping and disconnectable safety element (25, 26).

12. Method according to Claim 11, **characterized in that** the protection region (29) of a protection device (27) of an intrinsically safe conveying means (18) is reduced in size during entry and inside the production station (2) and is increased in size again during exit.

13. Method according to Claim 11 or 12, **characterized in that**, in the case of a multi-cell production station (2) with cell-specific safety circuits (22), the safety circuit (23) of the conveying means (18) is connected to the respective cell-specific safety circuit (22) when the conveying means (18) remains in a production cell (8, 9) and is temporarily connected to both cell-specific safety circuits (22) when the conveying means (18) changes cells and, when connecting the safety circuits (22, 23), the conveying means (18) is incorporated as a tripping and disconnectable safety element (25, 26).

14. Production plant having a production station (2) for workpieces (4), in particular vehicle body parts, and a conveying device (3) with a conveying means (18) which can be moved into the production station (2) and is intended to transport the workpieces (4) into and out of the production station (2), wherein the production station (2) and the conveying means (18) each have their own controller (13, 21) and their own safety circuit (22, 23), and wherein the production plant (1) has a safety device (5) according to one of Claims 1 to 10.

## Revendications

1. Dispositif de sécurité (5) pour un poste de fabrication (2) de pièces à travailler (4), en particulier de composants de carrosserie, et pour un moyen de transport (18) pouvant entrer dans et sortir du poste de fabrication (2) pour transporter les pièces à travailler (4) dans le et hors du poste de fabrication (2), dans lequel le poste de fabrication (2) et les moyens de transport (18) présentent respectivement leur propre commande (13, 21) et leur propre circuit de sécurité (22, 23), dans lequel le dispositif de sécurité (5) relie les circuits de sécurité (22, 23) du poste de fabrication (2) et du moyen de transport (18) se trouvant dans le poste de fabrication (2),
**caractérisé en ce que** lors de la liaison des circuits de sécurité (22, 23), le moyen de transport (18) est incorporé comme un élément de sécurité (25, 26) déclencheur et pouvant être déconnecté.

2. Dispositif de sécurité (5) selon la revendication 1, **caractérisé en ce que** le dispositif de sécurité (5) influence et modifie une zone de protection (29) d'un dispositif de protection (27) d'un moyen de transport (18) à sécurité intrinsèque lors de l'entrée et de la sorte et à l'intérieur du poste de fabrication (2).

3. Dispositif de sécurité (5) selon la revendication 1 ou 2, **caractérisé en ce que** le dispositif de sécurité (5) présente un dispositif de communication (6) pour la communication entre le poste de fabrication (2) et le moyen de transport (18).

4. Dispositif de sécurité (5) selon la revendication 1, 2 ou 3, **caractérisé en ce que** le dispositif de sécurité (5) présente un dispositif de reconnaissance (30) pourvu d'un moyen de détection (31, 32) pour reconnaître un moyen de transport (18) se trouvant dans la zone du poste de fabrication (2).

5. Dispositif de sécurité (5) selon la revendication 4, **caractérisé en ce que** le moyen de détection (31, 32) est disposé au niveau d'un sas (16) dans une cloison de protection (14, 15) du poste de fabrication (2).

6. Dispositif de sécurité (5) selon la revendication 5, **caractérisé en ce que** le moyen de détection ou respectivement un moyen de détection (31, 32) est disposé à l'entrée et à la sortie d'un sas (16).

7. Dispositif de sécurité (5) selon la revendication 4, 5 ou 6, **caractérisé en ce que** le moyen de détection (31, 32) est réalisé comme une barrière lumineuse à inhibition.

8. Dispositif de sécurité (5) selon l'une quelconque des revendications 4 à 7, **caractérisé en ce que** le dispositif de reconnaissance (30) présente un dispositif d'identification (33) pour l'identification et/ou la détection de position, de préférence pour la détection de l'identité et de la position, d'un moyen de transport (18).

9. Dispositif de sécurité (5) selon la revendication 8, **caractérisé en ce que** le dispositif d'identification (33) présente des moyens d'identification (34, 35) au niveau du poste de fabrication (2) et du moyen de transport (18) qui sont réalisés comme des codeurs d'identité et comme des dispositifs de lecture.

10. Dispositif de sécurité (5) selon l'une quelconque des revendications précédentes, **caractérisé en ce que** le dispositif de sécurité (5) présente un module de commande (24).

11. Procédé permettant de sécuriser un poste de fabrication (2) pour des pièces à travailler (4), en particulier des composants de carrosserie, et un moyen de transport (18) entrant dans et sortant du poste de fabrication (2), qui transporte des pièces à travailler (4) dans le et hors du poste de fabrication (2), dans lequel le poste de fabrication (2) et les moyens de transport (18) présentent respectivement leur propre commande (13, 21) et leur propre circuit de sécurité (22, 23), dans lequel les circuits de sécurité (22, 23) du poste de fabrication (2) et du moyen de transport (18) se trouvant dans le poste de fabrication (2) sont reliés,
**caractérisé en ce que** lors de la liaison des circuits de sécurité (22, 23), le moyen de transport (18) est incorporé comme un élément de sécurité (25, 26) déclencheur et qui peut être déconnecté.

12. Procédé selon la revendication 11, **caractérisé en ce que** la zone de protection (29) d'un dispositif de protection (27) d'un moyen de transport (18) à sécurité intrinsèque est réduite lors de l'entrée et à l'intérieur du poste de fabrication (2) et est à nouveau augmentée lors de la sortie.

13. Procédé selon la revendication 11 ou 12, **caractérisé en ce que** dans le cas d'un poste de fabrication à plusieurs cellules (2) avec des circuits de sécurité (22) propres aux cellules, le circuit de sécurité (23) du moyen de transport (18) est relié au circuit de sécurité (22) respectivement propre à la cellule lorsque le moyen de transport (18) se trouve dans une cellule de fabrication (8, 9), et est relié temporairement aux deux circuits de sécurité (22) propres aux cellules lorsque le moyen de transport (18) change de cellule, et le moyen de transport (18) est incorporé comme un élément de sécurité déclencheur et qui peut être déconnecté (25, 26) lorsque les circuits de sécurité (22, 23) sont reliés.

14. Chaîne de fabrication comprenant un poste de fabrication (2) pour des pièces à travailler (4), en particulier des composants de carrosserie, et un dispositif de transport (3) avec un moyen de transport (18) pouvant entrer dans le poste de fabrication (2) pour transporter les pièces à travailler (4) dans le et hors du poste de fabrication (2), dans laquelle le poste de fabrication (2) et le moyen de transport (18) présentent respectivement leur propre commande (13, 21) et leur propre circuit de sécurité (22, 23), et dans laquelle la chaîne de fabrication (1) présente un dispositif de sécurité (5) selon l'une quelconque des revendications 1 à 10.
